# EUROPEAN PATENT SPECIFICATION

(11) **EP 2 831 306 B1**
(45) Date of publication and mention of the grant of the patent: **28.06.2017**
(21) Application number: 13711423.7
(22) Date of filing: 22.03.2013
(51) Int. Cl.: C23F 1/12, C23F 1/44, B23P 6/00, B23K 1/018, B23K 35/38, C23G 5/00, B23K 35/22

(54) **METHOD FOR SEPARATING A METAL PART FROM A CERAMIC PART**
VERFAHREN ZUR ABTRENNUNG EINES METALLTEILS VON EINEM KERAMIKTEIL
PROCÉDÉ DE SÉPARATION D'UNE PIÈCE MÉTALLIQUE À PARTIR D'UNE PIÈCE EN MATÉRIAU CÉRAMIQUE

(30) Priority: 28.03.2012 EP 12161874
(43) Date of publication of application: 04.02.2015
(73) Proprietor: Ansaldo Energia IP UK Limited, London W1G 9DQ (GB)
(72) Inventor: BECKEL, Daniel, CH-5430 Wettingen (CH); STANKOWSKI, Alexander, CH-5303 Wuerenlingen (CH); DUVAL, Sophie Betty Claire, CH-8004 Zurich (CH)
(74) Representative: Bernotti, Andrea
(86) International application number: PCT/EP2013/056112
(87) International publication number: WO 2013/144024

(56) References cited:
- WO-A1-2009/129820
- DE-A1-102008 011 747
- US-A- 5 444 911
- US-A1- 2008 229 567
- US-A1- 2008 307 793

## Description

### BACKGROUND OF THE INVENTION

The present invention relates to the processing of hybrid metal/ceramic parts in the field of gas turbine technology. It refers to a method for separating a metal part from a ceramic part according to the preamble of claim 1.

### PRIOR ART

Modern, next generation gas turbine hot gas path components consist of more than one material (see for example EP 1 362 983 A2, US 2010/0166551 A1, EP 2 017 433 A2, EP 2 108 785 A2, US 2010/0074759 A1 or US 7,452,189 B2) to adjust the properties of each region of the component to its environment.

Very often those parts consist of ceramic and metal sections to make use of the higher temperature capability of the ceramic where needed and of the strength / and/or toughness of the metal where needed.

After completion of one service interval, the components need to be disassembled and worn pieces need to be replaced. Typically the ceramic part cannot be reworked and will be replaced, while the metal part can be reused or reworked (e.g. crack brazing). Such modular parts are often joined together by brazing (see US 2008/0056888 A1, US 2008/0307793 A1).

Limited information is available on disassembly of modular parts. US 2008/0229567 A1 discloses a process that intends to leach out only a ceramic matrix in which ceramic fibres are embedded and to restore the ceramic afterwards by infiltration. However, the leaching process is not disclosed. In any case, leaching (which generally involves a liquid) is typically a slow process, whereas a gaseous process that is executed at higher temperatures, might have the advantage of the exponential temperature dependence of most chemical reactions, thus providing a faster process.

Furthermore, the leaching process would only be suitable for a local repair of the ceramic part, which is very unlikely considering the brittle behaviour of ceramics and does not take advantages of the modular design of the component, which aims at replacing worn pieces instead of doing repair, which anyway can only cope with limited damages.

Especially, when considering multiple reconditioning or heavy damages of gas turbine parts, a disassembly is unavoidable. Thus, although US 2008/0229567 A1 provides a process that is beneficial for some niche applications, it does not solve the problem of how to efficiently remove the ceramic part from the metallic part.

Another process known in the art for disassembling of brazed parts is de-brazing, i.e. subjecting the component to high temperatures in order to re-melt the braze alloy. However, this requires temperatures exceeding the original braze temperature, since the melting point depressants have diffused during service operation and thus the liquidus temperature of the braze joint has increased.

Therefore, the component, especially low tolerance joints, is prone to thermal deterioration. In addition, the braze alloy is only re-melt but not dissolved, i.e. residues are still attached to the joining surfaces even if the parts can be separated. However, these joining surfaces have complicated geometries and tight tolerances, so that every mechanical cleaning of the joining surfaces risks to modify their geometry beyond the tolerance, especially when low tolerance parts are involved.

### SUMMARY OF THE INVENTION

It is an object of the present invention to provide a method, which offers a time efficient one step process for disassembly, cleaning, preparation for repair and joining of a hybrid component, especially for gas turbines, said process being used to separate a ceramic or ceramic composite from a metal, e.g. separating ceramic parts from metallic parts of a modular hybrid gas turbine component.

It is another object of the invention to provide a process, which can be used for the simultaneous cleaning of the metal part and/or ceramic composite part, such that the metal part can be brazed without further cleaning or oxide removal and in case no rework of the metal part is required the part is immediately ready for joining with a new ceramic part.

It is a further object of the invention to provide a process, which can be used as a batch process, not a single piece process, and which allows economic ceramic removal for entire sets in very short time.

These and other objects are obtained by a method according to claim 1.

The inventive method is for separating a metal part from a ceramic part, which are joined at a connecting face within a hybrid component, especially of a gas turbine. It is characterized in that said hybrid component is subjected to an inert/reducing atmosphere in a gaseous process at elevated temperatures to dissolve the connection between said metal part and said ceramic part, wherein said reducing atmosphere contains halogens as reactive species.

Specifically, said halogens have a higher electronegativity than oxygen, on either Pauling Scale, Mulliken Scale or Allred-Rochow Scale.

More specifically, said halogens comprise F.

Alternatively, said halogens comprise CI.

According to another embodiment of the invention said ceramic part itself is dissolved or disintegrated as a whole.

Specifically, said ceramic part is a partially or fully stabilized ceramic, whereby, during the process, the stabilizing phase is removed by phase change from the ceramic, such that the entire ceramic destabilizes and is readily removed or spalls of, as soon as the content of the stabilizing phase decreases below a stability limit, especially during a temperature change, when being cooled down from reaction temperature.

More specifically, said ceramic part is a partially or fully stabilized oxide ceramic.

Especially, said partially or fully stabilized oxide ceramic is zirconia stabilized with a rare earth or an alkaline earth element or combinations thereof.

Preferably, said rare earth or alkaline earth element is one of Sc, Y, Sm, Mg, Ca, Ce, Ta or Sr.

According to another embodiment of the invention, said ceramic part contains an alkali silicate, alkali borosilicate, earth alkali silicate, earth alkali borosilicate or any of those compounds with the addition of a semimetal or metalloid, and that, during the process, the halogen attacks the Si containing phase, which results in dissolution and removal of the entire ceramic.

According to a further embodiment of the invention a joint layer is disposed between said metal part and said ceramic part, and that said halogen attacks said joint layer, such that said metal part and said ceramic part are separated from each other.

Specifically, said joint layer comprises a braze alloy and/or a mineral glue or a high temperature resistant cement.

According to another embodiment of the invention, said hybrid component is put in a reactor, which is heated to more than 850°C, preferably to more than 1000°C but not more than 1150°C.

According to a further embodiment of the invention said process is conducted as a batch process to allow economic ceramic-metal separation for entire sets in very short time.

According to a just another embodiment of the invention the metal part and/or ceramic composite part is simultaneously cleaned in said process, such that it can be brazed without further cleaning or oxide removal and, in case no rework of the metal part is required, is immediately ready for joining with a new ceramic part, and/or the ceramic composite part cane be re-used.

### BRIEF DESCRIPTION OF THE DRAWINGS

The present invention is now to be explained more closely by means of different embodiments and with reference to the attached drawings.
- Fig. 1: shows different steps in a method for removing the ceramic part from a hybrid metal/ceramic component in a pulsed process in a reactor according to an embodiment of the invention; and;
- Fig. 2: shows different steps in a method for separating the ceramic part from the metal part of a hybrid metal/ceramic component in a pulsed process in a reactor according to another embodiment of the invention.

### DETAILED DESCRIPTION OF DIFFERENT EMBODIMENTS OF THE INVENTION

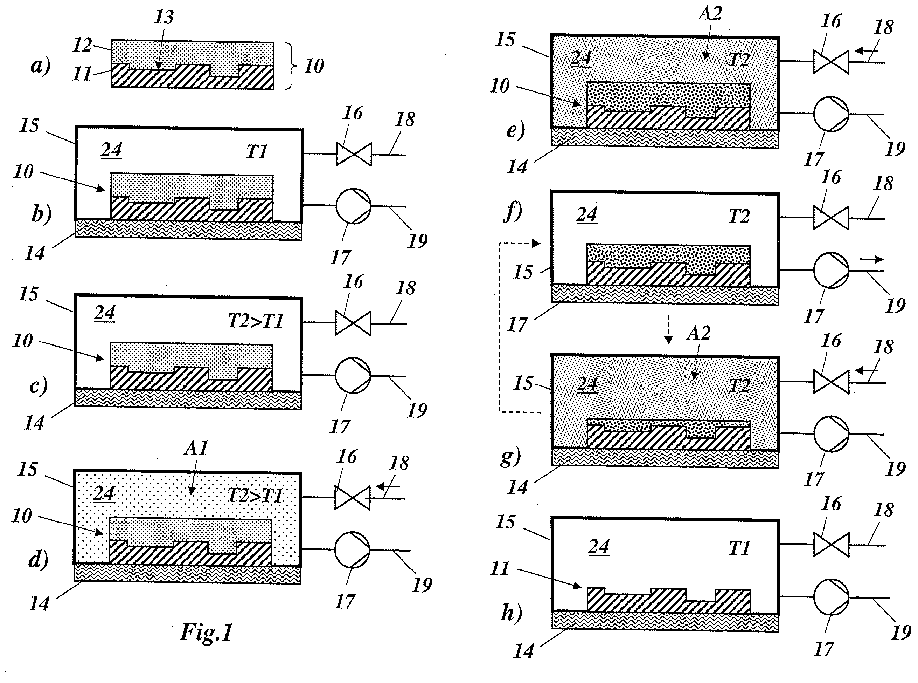

Fig. 1 shows different steps in a method for removing the ceramic part from a hybrid metal/ceramic component in a pulsed process in a reactor according to an embodiment of the invention.

The process starts with a (simplified exemplary) hybrid component 10, which comprises a metal part 11 and a ceramic part 12, which are jointly connected at a connecting face 13 (Fig. 1(a)).

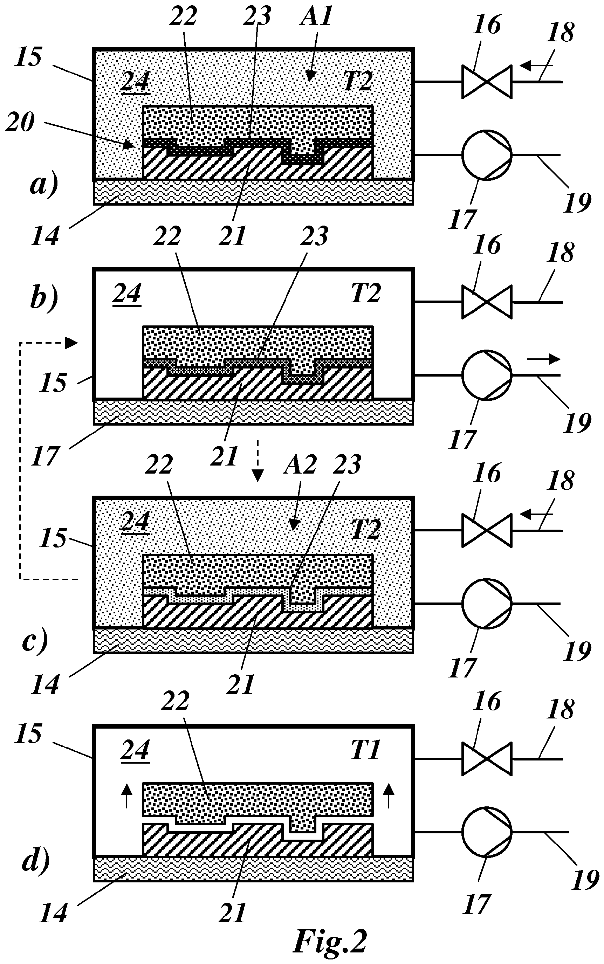

The hybrid component 10 is put into a reactor 15, which can be heated by means of a heater 14 (Fig. 2(b)). The inner space 24 of the reactor 15 can be filled with one or more gases through a gas supply line 18, which can be closed by means of valve 16. On the other hand, the inner space 24 can be pumped out or evacuated by means of pump 17 through a pumping line 19.

When the process begins at a low temperature T1 (e.g. room temperature), the reactor 15 is heated up to an elevated temperature T2, which is substantially higher than the temperature T1 (Fig. 1(c)).

Then, a first inert/reducing atmosphere A1 containing hydrogen (H₂) is established in the inner space 24 of the reactor 15 by introducing gas through gas supply line 18 (Fig. 1(d)).

By introducing a reactive halogen, e.g. F, in form of an HF gas, through gas supply line 18, a second reducing atmosphere A2 is established, which begins to destabilize the ceramic part 12 of the hybrid component 10 (Fig. 1 (e)).The reactor 15 is operated in a pulsed mode, i.e. the reaction products are removed from the reactor 15 by pumping out the gas with pump 17 (Fig. 1 (f)) and supplying fresh gas afterwards through gas supply line 18 (Fig. 1 (g)). Several of such cycles (Fig.1 (f) -> Fig. 1 (g) -> Fig. 1 (f) -> Fig. 1 (g).....) are done, until the ceramic part 12 is completely removed and the surface of the metal part 11 cleaned (Fig. 1 (h)).
In the following, some examples of the method according to the invention will be explained.

### 1. Example:

Disassembly of a modular hybrid part, having a ceramic airfoil fabricated from yttria stabilized zirconia (YSZ) brazed to a load-carrying spar fabricated from an SX superalloy:
- Aim: A set of modular hybrid parts shall be reconditioned, the ceramic portion requires replacement due to foreign object damage (FOD). The expensive metal part, which consists of an SX superalloy can be used for another service cycle;
- Process: the parts are put in a reactor 15, which is heated to more than 850°C, preferably to more than 1000°C but not more than 1150°C. To achieve a reducing atmosphere the reactor 15 is flooded with H₂. As reactive halogen, F is introduced as HF gas. The reactor 15 is operated in a pulsed mode, i.e. the reaction products are removed from the reactor 15 by pumping out the gas and supplying fresh gas afterwards. Several of such cycles are done;
- Result: The gas readily destabilizes the YSZ, which disintegrates, the braze alloy interface is attacked and cleaned on the surface as well. Thus the complex-shaped joining surface of the metallic part with its tight tolerances is preserved without the need for further (mechanical) cleaning and is ready for being brazed to a new ceramic part. Additionally, the metal parts are simultaneously cleaned by this treatment, thus the cracks can be repaired without further preparation.

### 2. Example:

Disassembly of a modular hybrid part, fabricated from a DS superalloy, with a ceramic portion on the pressure side of the trailing edge (cut-back trailing edge, e.g. shown in document WO 2010/028913 A1) fabricated from YSZ:
- Aim: preserve the expensive DS component and replace only the worn trailing edge insert;
- Process: the parts are put in a reactor 15, which is heated to more than 850°C, preferably to more than 1000°C but not more than 1150°C. To achieve a reducing atmosphere the reactor 15 is flooded with H₂. As reactive halogen, F is introduced as HF gas. The reactor 15 is operated in a pulsed mode, i.e. the reaction products are removed from the reactor 15 by pumping out the gas and supplying fresh gas afterwards. Several of such cycles are done;
- Result: the YSZ insert from the pressure side of the trailing edge is readily dissolved, the rest of the component is preserved and the surface is clean and ready for brazing a new insert into the trailing edge. Considering the fragile nature of the small joining surface, any mechanical cleaning process is prohibitive.

### 3. Example:

Disassembly of a modular hybrid part, having a ceramic airfoil fabricated from YSZ which is attached to the root section using a bi-cast process, i.e. the parts are interlocked:
- Aim: preserve the precision-machined root section and replace the airfoil, which was damaged by FOD;
- Process: the parts are put in a reactor 15, which is heated to more than 850°C, preferably to more than 1000°C but not more than 1150°C. To achieve a reducing atmosphere the reactor 15 is flooded with H₂. As reactive halogen, F is introduced as HF gas. The reactor 15 is operated in a pulsed mode, i.e. the reaction products are removed from the reactor 15 by pumping out the gas and supplying fresh gas afterwards. Several of such cycles are done;
- Result: the YSZ is readily de-stabilized and disintegrated. Thus is can be removed from the interlocking features of the root. A replacement airfoil can be brazed to the cleaned root.

### 4. Example:

Disassembly of a modular hybrid part, having a ceramic section fabricated from a ceramic matrix composite (CMC) comprising SiN fibres in a water-glass based matrix, which is attached using a mineral glue to a complex shaped superalloy section that includes channels for instrumentation and was build employing selective laser melting:
- Aim: remove worn section but preserve expensive instrumented platform;
- Process: the parts are put in a reactor 15, which is heated to more than 850°C, preferably to more than 1000°C but not more than 1150°C. To achieve a reducing atmosphere the reactor 15 is flooded with H₂. As reactive halogen, F is introduced as HF gas. The reactor 15 is operated in a pulsed mode, i.e. the reaction products are removed from the reactor 15 by pumping out the gas and supplying fresh gas afterwards. Several of such cycles are done;
- Result: while the ceramic SiN fibres resist the HF attack, the water-glass based matrix is strongly attacked, thus the CMC is readily removed from the expensive platform, which is cleaned at the same time and can be reused.

Fig. 2 shows different steps in a method for separating the ceramic part from the metal part of a hybrid metal/ceramic component in a pulsed process in a reactor according to another embodiment of the invention.

The process starts with a component 20, which comprises a metal part 21, which is joined with a ceramic part 22 by means of a joint layer 23 (Fig. 2(a)).

The component 20 is put into a reactor 15, which can be heated by means of a heater 14 (Fig. 2(b)). The inner space 24 of the reactor 15 can be filled with one or more gases through a gas supply line 18, which can be closed by means of valve 16. On the other hand, in the inner space 16 can be pumped out or evacuated by means of pump 17 through a pumping line 19.

The reactor 15 is heated up to a temperature T2, which is substantially higher than room temperature (Fig. 2(a)).

By introducing hydrogen and a reactive halogen, e.g. F, in form of an HF gas, through gas supply line 18, a reducing atmosphere A2 is established, which begins to destabilize the joint layer 23 of the component 20 (Fig. 2(a)).
The reactor 15 is operated in a pulsed mode, i.e. the reaction products are removed from the reactor 15 by pumping out the gas with pump 17 (Fig. 2(b)) and supplying fresh gas afterwards through gas supply line 18 (Fig. 2(c)). Several of such cycles (Fig. 2(b) -> Fig. 2(c) -> Fig. 2(b) -> Fig. 2(c).....) are done, until the joint layer 23 is completely removed and both parts 21, 22 are separated and the surface of metal part 21 cleaned (Fig. 2(d)).

### 5. Example:

Disassembly of a modular hybrid part, having a ceramic airfoil fabricated from Al₂O₃ that is attached to the root section using a buffer layer (joint layer) which consists of porous YSZ:
- Aim: preserve the precision-machined root section and replaced worn airfoil;
- Process: the parts are put in a reactor 15, which is heated to more than 850°C, preferably to more than 1000°C but not more than 1150°C. To achieve a reducing atmosphere the reactor 15 is flooded with H₂. As reactive halogen, F is introduced as HF gas. The reactor 15 is operated in a pulsed mode, i.e. the reaction products are removed from the reactor 15 by pumping out the gas and supplying fresh gas afterwards. Several of such cycles are done;
- Result: In this case the airfoil, which consists of Al₂O₃ is only slowly attacked by the HF gas. However the porous buffer layer, which is fabricated from porous YSZ, dissolves readily in the HF gas, thus the Al₂O₃ airfoil can be easily detached from the metallic root section.

So the method offers a time efficient one step process for disassembly, cleaning, preparation for repair and joining of a hybrid metal/ceramic component, with the following charcateristics:
- Said process is used to separate a ceramic from a metal, e.g. separating ceramic parts from metallic parts of a modular hybrid gas turbine component.
- The halogen attacks preferably the stabilizing phase within the ceramic body or section, thus after dissolving only a few percent of the ceramic, the amount of the stabilizing phase has decreased below the stability limit and the entire ceramic disintegrates. This enables a very efficient removal of the ceramic with a minimum of reactive species.
- The halogen attacks and cleans the braze alloy/ceramic interface.
- Said braze alloy attacks the mineral glue or cement used for joining ceramic and metallic parts together.
- The process is a batch process, not a single piece process, which allows economic ceramic removal for entire sets in very short time.
- A benefit is the simultaneous cleaning of the metal part, thus the metal part can be brazed without further cleaning or oxide removal and in case no rework of the metal part is required the part is immediately ready for joining with a new ceramic part. So the process offers a time efficient one step process for disassembly, cleaning, preparation for repair and joining.

Further examples of the method according to the invention relate to:
- Abradables (conservation, cleaning of BC);
- Preservation of a specific metallic surface texture;
- Top layer from ceramic multi-layer coating (sacrificial surface sealing, EBC)
- Cleaning of clogged effusion/transpiration cooling holes.

### LIST OF REFERENCE NUMERALS

- 10,20: hybrid component (gas turbine)
- 11,21: metal part
- 12,22: ceramic part, ceramic composite part
- 13: connecting face
- 14: heater
- 15: reactor
- 16: valve
- 17: pump
- 18: gas supply line
- 19: pumping line
- 23: joint layer
- 24: inner space

## Claims

1. Method for separating a metal part (11, 21) from a ceramic part (12, 22), which are joined at a connecting face (13) within a modular hybrid component (10, 20), especially of a gas turbine, **characterized in that** said modular hybrid component (10, 20) is subjected to an inert/reducing atmosphere (A1, A2) in a gaseous process at elevated temperatures (T2) to dissolve the connection between said metal part (11, 21) and said ceramic part (12, 22), wherein said reducing atmosphere (A2) contains halogens as reactive species.

2. Method according to claim 1, **characterized in that** said halogens have a higher electronegativity than oxygen, on either Pauling Scale, Mulliken Scale or Allred-Rochow Scale.

3. Method according to claim 2, **characterized in that** said halogens comprise F.

4. Method according to claim 2, **characterized in that** said halogens comprise CI.

5. Method according to one of the claims 1 to 4, **characterized in that** said ceramic part (11, 21) itself is dissolved or disintegrated as a whole.

6. Method according to claim 5, **characterized in that** said ceramic part (11, 21) is a partially or fully stabilized ceramic, whereby, during the process, the stabilizing phase is removed by phase change from the ceramic, such that the entire ceramic destabilizes and is readily removed or spalls of, as soon as the content of the stabilizing phase decreases below a stability limit.

7. Method according to claim 6, **characterized in that** said ceramic part (11, 21) is a partially or fully stabilized oxide ceramic.

8. Method according to claim 7, **characterized in that** said partially or fully stabilized oxide ceramic is zirconia stabilized with a rare earth or an alkaline earth element or combinations thereof.

9. Method according to claim 8, **characterized in that** said rare earth or alkaline earth element is one of Sc, Y, Sm, Mg, Ca, Ce, Ta or Sr.

10. Method according to claim 5, **characterized in that** said ceramic part (11, 21) contains an alkali silicate, alkali borosilicate, earth alkali silicate, earth alkali borosilicate or any of those compounds with the addition of a semimetal or metalloid, and that, during the process, the halogen attacks the Si containing phase, which results in dissolution and removal of the entire ceramic.

11. Method according to one of the claims 1 to 4, **characterized in that** a joint layer (23) is disposed between said metal part (21) and said ceramic part (22), and that said halogen attacks said joint layer (23), such that said metal part (21) and said ceramic part (22) are separated from each other.

12. Method according to claim 11, **characterized in that** said joint layer (23) comprises a braze alloy and/or a mineral glue or cement.

13. Method according to one of the claims 1 to 12, **characterized in that** said hybrid component (10, 20) is put in a reactor (15), which is heated to more than 850°C, preferably to more than 1000°C but not more than 1150°C.

14. Method according to one of the claims 1 to 13, **characterized in that** said process is conducted as a batch process to allow economic ceramic-metal separation for entire sets in very short time.

15. Method according to one of the claims 1 to 14, **characterized in that** the metal part (11, 21) and/or ceramic composite part (22) is simultaneously cleaned in said process, such that it can be brazed without further cleaning or oxide removal and, in case no rework of the metal part is required, is immediately ready for joining with a new ceramic part, and/or the ceramic composite part (22) can be re-used.

## Patentansprüche

1. Verfahren zur Abtrennung eines Metallteils (11, 21) von einem Keramikteil (12, 22), die in einem modularen Hybridbauteil (10, 20), insbesondere einer Gasturbine, mit einer Verbindungsfläche (13) verbunden sind, **gekennzeichnet dadurch, dass** das modulare Hybridbauteil (10, 20) in einem gasförmigen Prozess bei hohen Temperaturen (T2) einer inerten/reduzierenden Atmosphäre (Al, A2) ausgesetzt ist, um die Verbindung zwischen dem Metallteil (11, 21) und dem Keramikteil (12, 22) zu lösen, wobei die reduzierende Atmosphäre (A2) als reaktive Spezies Halogene enthält.

2. Verfahren nach Anspruch 1, **gekennzeichnet dadurch, dass** die Halogene auf der Pauling-Skala, Mulliken-Skala oder Allred-Rochow-Skala eine höhere Elektronegativität aufweisen als Sauerstoff.

3. Verfahren nach Anspruch 2, **gekennzeichnet dadurch, dass** die Halogene F enthalten.

4. Verfahren nach Anspruch 2, **gekennzeichnet dadurch, dass** die Halogene Cl enthalten.

5. Verfahren nach einem der Ansprüche 1 bis 4, **gekennzeichnet dadurch, dass** das Keramikteil (11, 21) sich auflöst oder als Ganzes zerfällt.

6. Verfahren nach Anspruch 5, **gekennzeichnet dadurch, dass** es sich bei dem Keramikteil (11, 21) um eine teil- oder vollstabilisierte Keramik handelt, wobei die Stabilisierungsphase während des Prozesses durch einen Phasenübergang von der Keramik abgetrennt wird, so dass sich die gesamte Keramik destabilisiert und, sobald der Gehalt der Stabilisierungsphase unter eine Stabilitätsgrenze sinkt, leicht ablöst oder abbröckelt.

7. Verfahren nach Anspruch 6, **gekennzeichnet dadurch, dass** es sich bei dem Keramikteil (11, 21) um eine teil- oder vollstabilisierte Oxidkeramik handelt.

8. Verfahren nach Anspruch 7, **gekennzeichnet dadurch, dass** es sich bei der teil- oder vollstabilisierten Oxidkeramik um Zirkonia handelt, das mit einer seltenen Erde oder einem Erdalkalielement oder Kombinationen davon stabilisiert ist.

9. Verfahren nach Anspruch 8, **gekennzeichnet dadurch, dass** es sich bei der seltenen Erde oder dem Erdalkalielement um Sc, Y, Sm, Mg, Ca, Ce, Ta oder Sr handelt.

10. Verfahren nach Anspruch 5, **gekennzeichnet dadurch, dass** das Keramikteil (11, 21) ein Alkalisilikat, Alkaliborosilikat, Erdalkalisilikat, Erdalkaliborosilikat oder eine dieser Verbindungen mit dem Zusatz eines Halbmetalls oder Metalloids enthält und dass das Halogen die Si-enthaltende Phase während des Prozess angreift, was die Auflösung und Abtrennung der gesamten Keramik zur Folge hat.

11. Verfahren nach einem der Ansprüche 1 bis 4, **gekennzeichnet dadurch, dass** zwischen dem Metallteil (21) und dem Keramikteil (22) eine Verbindungsschicht (23) angeordnet wird, und dass das Halogen die Verbindungsschicht (23) angreift, so dass das Metallteil (21) und das Keramikteil (22) voneinander getrennt werden.

12. Verfahren nach Anspruch 11, **gekennzeichnet dadurch, dass** die Verbindungsschicht (23) eine Hartlötlegierung und/oder einen mineralischen Klebstoff oder Zement enthält.

13. Verfahren nach einem der Ansprüche 1 bis 12, **gekennzeichnet dadurch, dass** das Hybridbauteil (10, 20) in einen Reaktor (15) verbracht wird, der auf über 850°C, vorzugsweise auf über 1000°C, jedoch höchstens auf 1150°C erhitzt wird.

14. Verfahren nach einem der Ansprüche 1 bis 13, **gekennzeichnet dadurch, dass** das Verfahren als Chargenverfahren durchgeführt wird, so dass eine wirtschaftliche Keramik-Metall-Trennung ganzer Sätze in sehr kurzer Zeit möglich ist.

15. Verfahren nach einem der Ansprüche 1 bis 14, **gekennzeichnet dadurch, dass** das Metallteil (11, 21) und/oder das Keramikverbundteil (22) bei diesem Verfahren gleichzeitig gereinigt wird, so dass es ohne eine weitere Reinigung oder Oxidentfernung hartgelötet werden kann und, falls keine Nachbearbeitung des Metallteils erforderlich ist, sofort zur Verbindung mit einem neuen Keramikteil bereit ist, und/oder das Keramikverbundbauteil (22) wiederverwendet werden kann.

## Revendications

1. Procédé destiné à séparer une partie métallique (11, 21) d'une partie céramique (12, 22), qui sont reliées au niveau d'une face de liaison (13) à l'intérieur d'un composant hybride modulaire (10, 20), en particulier d'une turbine à gaz, **caractérisé en ce que** ledit composant hybride modulaire (10, 20) est soumis à une atmosphère inerte / de réduction (A1, A2) dans un procédé gazeux à des températures élevées (T2) de façon à dissoudre la liaison entre ladite partie métallique (11, 21) et ladite partie céramique (12, 22), dans lequel ladite atmosphère de réduction (A2) contient des halogènes en tant qu'espèces réactives.

2. Procédé selon la revendication 1, **caractérisé en ce que** lesdits halogènes présentent une électronégativité supérieure à celle de l'oxygène, sur l'échelle de Pauling, sur l'échelle de Mulliken ou sur l'échelle d'Allred-Rochow.

3. Procédé selon la revendication 2, **caractérisé en ce que** lesdits halogènes comprennent du F.

4. Procédé selon la revendication 2, **caractérisé en ce que** lesdits halogènes comprennent du CI.

5. Procédé selon l'une quelconque des revendications 1 à 4, **caractérisé en ce que** ladite partie céramique (11, 21) elle-même est dissoute ou désagrégée dans son ensemble.

6. Procédé selon la revendication 5, **caractérisé en ce que** ladite partie céramique (11, 21) est une céramique stabilisée en partie ou en totalité, grâce à quoi, au cours du procédé, la phase de stabilisation est éliminée par un changement de phase à partir de la céramique, de telle sorte que toute la céramique soit déstabilise et éliminée de manière aisée, ou s'effrite, dès que la teneur de la phase de stabilisation descend en dessous d'une limite de stabilité.

7. Procédé selon la revendication 6, **caractérisé en ce que** ladite partie céramique (11, 21) est une céramique d'oxyde stabilisée en partie ou en totalité.

8. Procédé selon la revendication 7, **caractérisé en ce que** ladite céramique d'oxyde stabilisée en partie ou en totalité, est de la zircone stabilisée avec une terre rare ou un élément de terre alcaline ou une association de ceux-ci.

9. Procédé selon la revendication 8, caractérisé que ladite terre rare ou ledit élément de terre alcaline, est l'un de Sc, Y, Sm, Mg, Ca, Ce, Ta ou Sr.

10. Procédé selon la revendication 5, **caractérisé en ce que** ladite partie céramique (11, 21) contient un silicate alcalin, un borosilicate alcalin, un silicate alcalin de terre, un borosilicate alcalin de terre ou n'importe lequel de ces composés auquel a été ajouté un semi-métal ou un métalloïde, et **en ce que**, au cours du procédé, l'halogène attaque la phase qui contient du Si, ce qui se traduit par une dissolution et une élimination de toute la céramique.

11. Procédé selon l'une quelconque des revendications 1 à 4, **caractérisé en ce qu'**une couche de liaison (23) est disposée entre ladite partie métallique (21) et ladite partie céramique (22), et **en ce que** ledit halogène attaque ladite couche de liaison (23), de telle sorte que ladite partie métallique (21) et ladite partie céramique (22) soient séparées l'une de l'autre.

12. Procédé selon la revendication 11, **caractérisé en ce que** ladite couche de liaison (23) comprend un alliage de brasure et / ou une colle ou un ciment minéral.

13. Procédé selon l'une quelconque des revendications 1 à 12, caractérisé dans ce que ledit composant hybride (10, 20) est placé dans un réacteur (15), qui est chauffé à plus de 850 °C, de préférence à plus de 1000 °C mais pas à plus de 1150 °C.

14. Procédé selon l'une quelconque des revendications 1 à 13, **caractérisé en ce que** ledit procédé est exécuté sous la forme d'un procédé discontinu de façon à permettre une séparation céramique-métal économique d'ensembles entiers en très peu de temps.

15. Procédé selon l'une quelconque des revendications 1 à 14, **caractérisé en ce que** la partie métallique (11, 21) et / ou la partie composite céramique (22) sont nettoyées de manière simultanée dans ledit procédé, de façon à pouvoir la braser sans nettoyage supplémentaire ou élimination d'oxyde et, dans le cas où aucun réusinage de la partie métallique n'est nécessaire, cette dernière est immédiatement prête pour être reliée à une nouvelle partie céramique, et / ou la partie composite céramique (22) peut être réutilisée.
